# FASCICULE DE BREVET EUROPEEN

(11) **EP 2 802 759 B1**
(45) Date de publication et mention de la délivrance du brevet: **18.05.2016**
(21) Numéro de dépôt: 12783229.3
(22) Date de dépôt: 09.11.2012
(51) Int. Cl.: F02D 41/02, F02D 13/02

(54) **PROCEDE DE REGENERATION D'UN FILTRE A PARTICULES**
VERFAHREN ZUR STEUERUNG EINES PARTIKELFILTERS
PARTICULATE FILTER REGENERATION METHOD

(30) Priorité: 11.01.2012 FR 1250296
(43) Date de publication de la demande: 19.11.2014
(73) Titulaire: Renault S.A.S., 92100 Boulogne-Billancourt (FR)
(72) Inventeur: QUECHON, Nicolas, F-91390 Morsang Sur Orge (FR); OBERNESSER, Philippe, F-75015 Paris (FR); DARCY, Pierre, F-91190 Gif Sur Yvette (FR)
(86) Numéro de dépôt international: PCT/EP2012/072249
(87) Numéro de publication internationale: WO 2013/104450

(56) Documents cités:
- DE-A1- 19 926 138
- US-A1- 2003 221 421
- US-A1- 2007 062 179
- US-A1- 2009 277 434
- US-A1- 2011 072 794

## Description

L'invention se rapporte à un procédé de régénération d'un filtre à particules. Généralement, un moteur de véhicule, et plus spécifiquement un moteur diesel, est équipé d'un filtre à particules permettant, dans un premier temps, de stocker les particules émises par ledit moteur, puis, dans un deuxième temps, de les éliminer en augmentant la température d'échappement pour les brûler, comme par exemple dans la publication de demande de brevet US2003/0221421 A1.

Une façon de provoquer cette élévation de température, est d'utiliser un injecteur additionnel de carburant, placé à l'échappement du moteur, et qui envoie du carburant dans les gaz d'échappement, afin que la combustion de ce carburant ajouté augmente la température des particules et des suies. Cette méthode, qui est certes efficace demeure toutefois coûteuse, car elle doit faire appel à un injecteur supplémentaire, qu'il faut implanter de façon précise et rigoureuse dans le conduit d'échappement du moteur.

Les procédés de régénération d'un filtre à particules selon l'invention, impliquent des pièces déjà existantes et déjà implantées dans le circuit de gaz, pour parvenir à augmenter la température des particules et des suies stockées dans le filtre, lesdites pièces étant utilisées de façon originale et judicieuse. Ces procédés permettent donc de régénérer un filtre à particules de façon performante, tout en demeurant faciles et rapides à mettre en oeuvre, car ils ne font intervenir aucune pièce additionnelle et ne nécessitent aucune manipulation ou modification compliquée. Ces procédés ne peuvent être appliqués qu'aux véhicules dotés d'un moteur à deux temps, puisqu'ils s'appuient sur une spécificité technique de fonctionnement de ces moteurs.

L'invention a pour objet un procédé de régénération d'un filtre à particules d'un moteur de véhicule à deux temps, ledit moteur comprenant au moins une chambre de combustion comportant au moins un organe d'admission et au moins un organe d'échappement, le cycle de fonctionnement du moteur comportant une première étape d'injection de carburant pour assurer la phase de combustion dans chaque chambre, suivie d'une étape de balayage au cours de laquelle chaque organe d'admission et chaque organe d'échappement est en position d'ouverture. La principale caractéristique technique d'un procédé selon l'invention, est qu'il comprend une étape d'injection de carburant durant l'étape de balayage. Il faut rappeler que le cycle à deux temps d'un moteur thermique diffère d'un cycle à quatre temps, car il s'effectue en seulement un tour de vilebrequin au lieu de deux. Comme les phases d'un cycle à deux temps sont identiques à celles d'un cycle à quatre temps, à savoir, l'admission, l'échappement, la compression et la détente, la plage de temps pour effectuer les phases d'admission et d'échappement sont réduites et doivent se superposer. Il existe donc une plage temporelle de recouvrement entre les phases d'admission et d'échappement, pour lesquelles les organes d'admission et d'échappement sont ouverts en même temps, cette plage de recouvrement correspondant à l'étape de balayage. Le principe de l'invention repose donc sur une injection de carburant dans chaque chambre de combustion pendant cette étape de balayage, afin qu'au moins une partie de ce carburant soit emportée par les gaz d'échappement, dans le but de brûler dans lesdits gaz et d'élever la température des particules et des suies piégées par le filtre. Dans la plupart des cas, une fraction du carburant injecté lors de cette étape de balayage, demeure dans chaque chambre sans être évacuée avec les gaz d'échappement, cette fraction contribuant à réaliser la phase de combustion dans chaque chambre, du cycle moteur suivant. Le moteur du véhicule peut tout aussi bien être un moteur à essence, qu'un moteur Diesel. Il est à préciser que l'injection de carburant lors de l'étape de balayage sert uniquement à la régénération du filtre à particules et est sans influence sur les performances du moteur. Le terme véhicule est large et peut désigner tous les engins motorisés, aptes à évoluer sur terre, sur la mer ou dans les airs. Le terme « organe » est un terme général, qui peut par exemple désigner, soit une soupape, soit une lumière.

Avantageusement, chaque chambre de combustion est munie d'un seul dispositif d'injection de carburant, pour réaliser l'injection de carburant lors de l'étape de balayage et lors de la première étape d'injection. De cette manière, le procédé de régénération selon l'invention, tire bénéfice de la présence du dispositif d'injection déjà présent dans chaque chambre pour le fonctionnement du moteur, afin de réaliser la phase d'injection pendant l'étape de balayage.

De façon préférentielle, le dispositif d'injection de carburant possède une buse centrale permettant de diffuser le carburant de façon homogène dans chaque chambre.

De façon avantageuse, l'étape d'injection de carburant durant l'étape de balayage est séparée de la première étape d'injection. Les deux étapes d'injection, lors d'un cycle moteur, ne sont pas réalisées en continuité l'une de l'autre. Il n'existe aucune période de recouvrement entre ces deux phases d'injection.

Préférentiellement, l'étape d'injection de carburant durant l'étape de balayage, a une durée inférieure à celle de la première étape d'injection.

Avantageusement, la quantité de carburant injectée durant l'étape de balayage est inférieure à la quantité injectée lors de la première étape. L'étape d'injection de carburant pendant la phase de balayage ne jouant aucun rôle au niveau de la performance du moteur, elle constitue une étape d'appoint, uniquement prévue pour nettoyer le filtre et ne nécessite donc pas une injection massive de carburant. De plus, dans un souci d'économie, cette injection additionnelle ne doit pas constituer une surconsommation de carburant pénalisante pour l'utilisateur du véhicule.

De façon préférentielle, le carburant est du gazole. Le procédé de régénération d'un filtre à particules selon l'invention est particulièrement adapté aux véhicules dotés d'un moteur Diesel.

Selon un autre mode de réalisation préféré d'un procédé selon l'invention, chaque chambre possède un premier dispositif d'injection pour assurer la première phase d'injection, et un deuxième dispositif d'injection pour effectuer l'injection de carburant pendant la phase de balayage. De cette manière, le deuxième dispositif d'injection peut être positionné de façon optimisée, afin de favoriser les conditions d'injection du carburant dans les gaz d'échappement. Bien que cette configuration ne soit pas la plus économique en raison de la présence d'un deuxième dispositif d'injection, elle peut apparaitre un peu plus performante que celle n'impliquant qu'un seul dispositif d'injection, car le deuxième dispositif peut être spécifiquement orienté de façon à assurer une injection de carburant directement vers le conduit d'échappement de chaque chambre.

Préférentiellement, l'étape d'injection de carburant pendant l'étape de balayage, s'effectue à une fréquence moins élevée que celle de la première étape d'injection. En effet, dans un souci d'optimisation d'un procédé selon l'invention, l'étape d'injection de carburant pendant l'étape de balayage, ne s'effectue pas lors de tous les cycles du moteur, mais seulement lors de séquences bien précises, séparées chacune par plusieurs cycles moteur. Avantageusement, l'étape d'injection de carburant pendant l'étape de balayage est programmée pour intervenir de façon régulière, entre un nombre prédéfini de cycles moteur.

Les procédés de régénération d'un filtre à particules selon l'invention, présentent l'avantage d'être efficaces, fiables et reproductibles, grâce à l'utilisation d'un dispositif d'injection de carburant déjà présent dans chaque chambre de combustion, et déjà utilisé avec succès pour assurer la phase de combustion d'un cycle moteur. Ils ont de plus l'avantage d'être utilisés avec une certaine modularité, en offrant la possibilité de programmer les phases d'injection selon une cadence bien précise des étapes de balayage.

On donne ci-après, une description détaillée d'un procédé de régénération d'un filtre à particules selon l'invention, en se référant aux figures 1 à 2.
- La figure 1 est une vue simplifiée d'une chambre de combustion, lors d'une étape d'injection de carburant pendant l'étape de balayage,
- La figure 2 est une vue de la chambre de combustion de la figure 1, juste après l'injection de carburant.

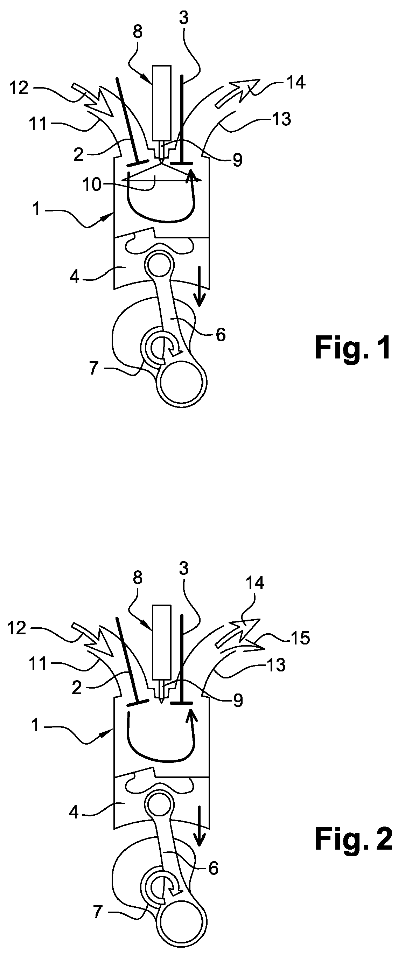

En se référant aux figures 1 et 2, il est rappelé qu'un moteur thermique comprend plusieurs chambres 1 de combustion, dotées chacune d'une soupape d'admission 2, d'une soupape d'échappement 3 et d'un piston amovible 4, mu par une bielle 6 montée articulée sur un vilebrequin 7. Un dispositif d'injection 8 doté d'une buse d'injection 9 et placé dans chaque chambre 1 dans une position centrale, permet de diffuser du carburant 10 de façon homogène, dans chacune desdites chambres 1. La soupape d'admission 2 peut être commandée pour ouvrir ou fermer un conduit d'admission 11 destiné à acheminer de l'air frais dans chaque chambre 1 selon le sens indiqué par la flèche 12, et la soupape d'échappement 3 peut être commandée pour ouvrir ou fermer un conduit d'échappement 13 pour évacuer les gaz d'échappement vers le filtre à particules, selon le sens indiqué par la flèche 14.

Le cycle à deux temps d'un moteur diesel d'un véhicule automobile, diffère d'un cycle à quatre temps, car il s'effectue en seulement un tour de vilebrequin au lieu de deux pour un cycle à quatre temps. Puisque les phases d'un cycle à deux temps et d'un cycle à quatre temps sont semblables, à savoir, une phase d'admission, une phase d'échappement, une phase de compression et une phase de détente, la plage de temps pour notamment effectuer les phases d'admission et d'échappement sont de fait réduites et doivent donc se superposer. La phase de recouvrement de ces deux phases, qui correspond à une ouverture simultanée de chaque soupape d'admission 2 et de chaque soupape d'échappement 3, est la phase ou l'étape de balayage.

En se référant à la figure 1, un procédé de régénération d'un filtre à particules selon l'invention concerne un moteur diesel à deux temps, et comprend une étape d'injection de carburant 10, qui peut par exemple être constitué par du gazole, lors de l'étape de balayage pour laquelle chaque soupape d'admission 2 et chaque soupape d'échappement 3 ouvrent respectivement le conduit d'admission 11 et le conduit d'échappement 13 de façon simultanée. Le temps d'injection est inférieur à la durée totale de l'étape de balayage.

En se référant à la figure 2, une partie du gazole injecté lors de cette étape de balayage, est emportée par le conduit d'échappement 13, comme l'indique la flèche 15, en étant étroitement lié au flux de gaz d'échappement matérialisé par la flèche 14. Cette partie de gazole évacuée va brûler dans les gaz d'échappement et provoquer la destruction des particules et des suies stagnant dans ledit filtre, au moyen d'une augmentation de la température. Un reliquat de gazole injecté, reste enfermé dans la chambre 1 et participera à la phase de combustion du cycle suivant.

## Revendications

1. Procédé de régénération d'un filtre à particules d'un moteur de véhicule à deux temps, ledit moteur comprenant au moins une chambre (1) de combustion comportant au moins un organe d'admission (2) et au moins un organe d'échappement (3), le cycle de fonctionnement du moteur comportant une première étape d'injection de carburant (10) pour assurer la phase de combustion dans chaque chambre (1), suivie d'une étape de balayage au cours de laquelle chaque organe d'admission (2) et chaque organe d'échappement (3) est en position d'ouverture, **caractérisé en ce qu'**il comprend une étape d'injection de carburant (10) durant l'étape de balayage.

2. Procédé selon la revendication 1, **caractérisé en ce que** chaque chambre de combustion (1) est munie d'un seul dispositif d'injection (8) de carburant, pour réaliser l'injection de carburant (10) lors de l'étape de balayage et lors de la première étape d'injection.

3. Procédé selon la revendication 2, **caractérisé en ce que** le dispositif d'injection (8) de carburant possède une buse centrale (9) permettant de diffuser le carburant (10) de façon homogène dans chaque chambre (1).

4. Procédé selon l'une quelconque des revendications 1 ou 2, **caractérisé en ce que** l'étape d'injection de carburant (10) durant l'étape de balayage est séparée de la première étape d'injection.

5. Procédé selon l'une quelconque des revendications 1 à 4, **caractérisé en ce que** l'étape d'injection de carburant (10) durant l'étape de balayage, a une durée inférieure à celle de la première étape d'injection.

6. Procédé selon l'une quelconque des revendications 1 à 5, **caractérisé en ce que** la quantité de carburant (10) injectée durant l'étape de balayage est inférieure à la quantité injectée lors de la première étape.

7. Procédé selon l'une quelconque des revendications 1 à 6, **caractérisé en ce que** le carburant (10) est du gazole.

8. Procédé selon la revendication 1, **caractérisé en ce que** chaque chambre (1) possède un premier dispositif d'injection pour assurer la première phase d'injection, et un deuxième dispositif d'injection pour effectuer l'injection de carburant (10) pendant la phase de balayage.

9. Procédé selon l'une quelconque des revendications 1 à 8, **caractérisé en ce que** l'étape d'injection de carburant pendant l'étape de balayage, s'effectue à une fréquence moins élevée que celle de la première étape d'injection.

## Patentansprüche

1. Verfahren zur Regeneration eines Partikelfilters eines Zweitaktmotors eines Kraftfahrzeugs, wobei der Motor mindestens eine Verbrennungskammer (1) aufweist, die mindestens ein Einlassorgan (2) und mindestens ein Auslassorgan (3) aufweist, wobei der Betriebszyklus des Motors einen ersten Schritt des Kraftstoffeinspritzens (10) aufweist, um die Verbrennungsphase in jeder Kammer (1) zu gewährleisten, der von einem Schritt des Spülens gefolgt ist, während dem jedes Einlassorgan (2) und jedes Auslassorgan (3) in offener Position ist, **dadurch gekennzeichnet, dass** es einen Schritt des Kraftstoffeinspritzens (10) während des Schrittes des Spülens aufweist.

2. Verfahren nach Anspruch 1, **dadurch gekennzeichnet, dass** jede Verbrennungskammer (1) mit einer einzigen Kraftstoffeinspritzvorrichtung (8) ausgestattet ist, um das Kraftstoffeinspritzen (10) während des Schrittes des Spülens und während des ersten Schrittes des Einspritzens durchzuführen.

3. Verfahren nach Anspruch 2, **dadurch gekennzeichnet, dass** die Kraftstoffeinspritzvorrichtung (8) eine zentrale Düse (9) besitzt, die es ermöglicht, den Kraftstoff (10) in jeder Kammer (1) homogen zu diffundieren.

4. Verfahren nach einem der Ansprüche 1 oder 2, **dadurch gekennzeichnet, dass** der Schritt des Kraftstoffeinspritzens (10) während des Schrittes des Spülens von dem ersten Schritt des Einspritzens getrennt ist.

5. Verfahren nach einem der Ansprüche 1 bis 4, **dadurch gekennzeichnet, dass** der Schritt des Kraftstoffeinspritzens (10) während des Schrittes des Spülens eine kürzere Dauer als jene des ersten Schrittes des Einspritzens aufweist.

6. Verfahren nach einem der Ansprüche 1 bis 5, **dadurch gekennzeichnet, dass** die Menge des Kraftstoffes (10), die während des Schrittes des Spülens eingespritzt wird, geringer als die Menge ist, die während des ersten Schrittes eingespritzt wird.

7. Verfahren nach einem der Ansprüche 1 bis 6, **dadurch gekennzeichnet, dass** der Kraftstoff (10) Dieselkraftstoff ist.

8. Verfahren nach Anspruch 1, **dadurch gekennzeichnet, dass** jede Kammer (1) eine erste Einspritzvorrichtung, um die erste Phase des Einspritzens zu gewährleisten, und eine zweite Einspritzvorrichtung besitzt, um das Kraftstoffeinspritzen (10) während der Phase des Spülens durchzuführen.

9. Verfahren nach einem der Ansprüche 1 bis 8, **dadurch gekennzeichnet, dass** der Schritt des Kraftstoffeinspritzens während des Schrittes des Spülens mit einer geringeren Häufigkeit als jene des ersten Schrittes des Einspritzens durchgeführt wird.

## Claims

1. Method for regenerating a particulate filter of a two-stroke vehicle engine, the said engine comprising at least one combustion chamber (1) comprising at least one inlet member (2) and at least one exhaust member (3), the engine operating cycle comprising a first step of injecting fuel (10) in order to perform the combustion phase in each chamber (1), followed by a scavenging step during which each inlet member (2) and each exhaust member (3) is in the open position, **characterized in that** it comprises a step of injecting fuel (10) during the scavenging step.

2. Method according to Claim 1, **characterized in that** each combustion chamber (1) is equipped with just one fuel injection device (8) for performing the injection of fuel (10) during the scavenging step and during the first injection step.

3. Method according to Claim 2, **characterized in that** the fuel injection device (8) possesses a central nozzle (9) allowing the fuel (10) to be diffused homogeneously in each chamber (1).

4. Method according to either one of Claims 1 and 2, **characterized in that** the step of injecting fuel (10) during the scavenging step is separate from the first injection step.

5. Method according to any one of Claims 1 to 4, **characterized in that** the step of injecting fuel (10) during the scavenging step has a duration shorter than that of the first injection step.

6. Method according to any one of Claims 1 to 5, **characterized in that** the quantity of fuel (10) injected during the scavenging step is smaller than the quantity injected during the first step.

7. Method according to any one of Claims 1 to 6, **characterized in that** the fuel (10) is diesel.

8. Method according to Claim 1, **characterized in that** each chamber (1) possesses a first injection device for performing the first injection phase, and a second injection device for carrying out the injection of fuel (10) during the scavenging phase.

9. Method according to any one of Claims 1 to 8, **characterized in that** the step of injecting fuel during the scavenging step, is performed at a frequency that is not as high as that of the first injection step.
